# FASCICULE DE BREVET EUROPEEN

(11) **EP 0 815 376 B1**
(45) Date de publication et mention de la délivrance du brevet: **24.10.2001**
(21) Numéro de dépôt: 96905822.1
(22) Date de dépôt: 29.02.1996
(51) Int. Cl.: F16K 41/02, F16K 1/226

(54) **DISPOSITIF DE ROBINETTERIE**
ARMATURVORRICHTUNG
VALVE DEVICE

(30) Priorité: 14.03.1995 EP 95103653
(43) Date de publication de la demande: 07.01.1998
(73) Titulaire: KSB Aktiengesellschaft, 67227 Frankenthal (DE)
(72) Inventeur: LAULHE, René, F-33140 Villenave-d'Ornon (FR); GUIROY, Patrick, F-33160 Cestas (FR); GARRIGUES, Jean-Claude, F-33140 Cadaujac (FR); DUBOIS, Jean-Paul, F-33230 Contras (FR); WATTIGNIER, Claude, F-33400 Talence (FR)
(74) Mandataire: Eidelsberg, Victor Albert
(86) Numéro de dépôt international: EP9600820
(87) Numéro de publication internationale: WO9628680

(56) Documents cités:
- EP-A- 0 023 953
- DE-A- 2 460 182
- DE-U- 9 004 610
- FR-A- 2 325 867
- GB-A- 1 354 260

## Description

### Domaine technique

L'invention concerne un dispositif de robinetterie, en particulier un robinet pour liquides agressifs et/ou délicats, tels que des liquides chimiques et des liquides alimentaires. Le dispositif de robinetterie comporte un corps, un obturateur manipulé par un arbre guidé dans un col du corps et une manchette d'étanchéité munie d'une collerette qui s'étend sur une certaine longueur le long du col.

Lorsqu'un tel robinet est installé sur une tuyauterie véhiculant un fluide sous pression, il ne doit pas constituer un point faible et il doit garantir la continuité de l'enceinte constituée par le tuyau vis-à-vis du fluide sous pression. Aucune fuite vers l'extérieur n'est permise, tant au niveau du raccordement avec les tuyauteries amont et aval, qu'au niveau des passages des arbres de manoeuvre et de guidage de l'obturateur.

La manchette enveloppant le corps réalise toutes les étanchéités nécessaires au robinet, l'étanchéité amont-aval, l'étanchéité aux jonctions avec les tuyauterie et l'étanchéité autour des passages d'arbre. Pour assurer l'étanchéité amont-aval à l'obturateur, mais aussi à la portée du passage d'arbre, la manchette peut comprendre un moyen élastique servant à créer la pression nécessaire. Dans le cas d'une manchette d'étanchéité en élastomère ce moyen élastique est constitué par la manchette et la collerette elles-mêmes. Dans le cas d'une manchette en plastomère un sommier élastique placé entre le corps et la manchette constitue ce moyen élastique.

Pour renforcer la sécurité d'enceinte, une deuxième étanchéité de sécurité peut être prévue fonctionnant comme presse-étoupe autour de l'arbre.

### État de la technique

Pour des manchettes en élastomère l'étanchéité de passages d'arbre est réalisée par compression de la collerette de la manchette entourant l'arbre entre le corps, l'arbre et l'obturateur. Outre le fait qu'il s'agit d'une étanchéité dynamique, les paramètres déterminant la compression de l'élastomère pour un niveau d'étanchéité donné sont sujet à variation en fonction des conditions de service du robinet, en particulier les variations de pression.

Dans la demande de brevet DE-A-24 60 182 est décrit une vanne-papillon, dont le papillon tourne autour d'un arbre traversant un siège annulaire, dont la section en U coiffe l'intérieur et les flancs du corps de vanne. Cette vanne-papillon comprend d'une part une première étanchéité à la portée du passage d'arbre assuré par un sommier élastique comprimé et d'autre part autour de la partie traversante de l'arbre une rondelle d'étanchéité tenue serrée par un moyen élastique, par exemple un ressort de compression, entre le palier de l'arbre et le siège. Cette deuxième étanchéité est une étanchéité de sécurité au cas où la première faillit.

Ces principes de construction ont l'inconvénient que l'étanchéité d'arbre dépend des déformations d'arbre ou des variations de température. En position fermée, l'obturateur est soumis à la pression différentielle entre l'amont et l'aval. Cette pression différentielle crée une force radiale sur l'arbre et l'arbre a tendance à se déplacer radialement vers l'aval. Le déplacement est le résultat d'une part du rattrapage des jeux de guidage de l'arbre dans la palier du corps et des jeux d'emmanchement entre l'arbre et l'obturateur et d'autre part de la déformation de l'arbre et de l'obturateur sous l'effet de la charge due à la pression sur une des faces de l'obturateur.

La déformation des pièces sous l'effet des charges est inévitable. Le jeu entre l'arbre et la collerette augmente côté amont et les moyens de la première étanchéité sont déchargés côté amont et chargés côté aval. Le fluide de l'amont peut monter maintenant en passant la première étanchéité jusqu'à une éventuelle seconde étanchéité, par exemple la première garniture de presse-étoupe.

Pour une manchette en élastomère les concepteurs ont de tout temps cherché à pallier cet inconvénient par des artifices tels que joint auxiliaire, formes spéciales, inserts de renforcement. Ces exemples ne sont pas exhaustifs. S'ils peuvent améliorer le résultat, ils ne résolvent pas complètement le problème car ils ne suppriment pas totalement le déséquilibre, sous l'effet de la déformation, des pressions de contact autour du passage d'arbre.

De même, pour que la seconde étanchéité d'une manchette en plastomère, ici le presse-étoupe, ne fuit pas, il est nécessaire d'excercer une telle pression sur la collerette, afin que la pression modifiée par les déformations d'arbre reste supérieure à celle du fluide. Avec l'augmentation de la pression dans le presse-étoupe, les forces de manoeuvre croissent également. Ceci nécessite l'emploi d'un dispositif avec ressort de compensation, encombrant et couteux.

Le FR-A-2 325 867 décrit un dispositif, conforme aux caractéristiques du préambule des revendications 1 et 2, réalisant une étanchéité aux passages d'arbre qui ne soit pas mise en cause par les déformations de l'arbre. Elle est complexe et beaucoup de pièces sont en contact avec le fluide.

Le but de l'invention est de trouver une solution pour mieux assurer l'étanchéité de l'arbre, sans augmenter la force de manoeuvre et économiquement avantageuse.

### Exposé de l'invention

L'objet de l'invention proposée présente un nouveau concept qui permet de conserver une pression de contact également répartie, entre la manchette et l'arbre, quelle que soit la pression différentielle appliquée sur l'obturateur et donc quelle que soit la déformation de l'ensemble arbre-obturateur.

Le montage flottant dans l'espace du corps permet au moyen de serrage de suivre les déplacements de l'arbre sous l'effet des déformations dues à la pression ou à la température sur l'obturateur. Cette liberté de mouvement fait que la pression de contact pour l'étanchéité n'est aucunement modifiée et que cette dernière est parfaitement fiable et durable, quelle que soit la pression de service à l'intérieur du dispositif de robinetterie.

Selon le premier mode de réalisation tel que défini par la revendication 1, on prévoit un revêtement pour l'obturateur, la manchette et le revêtement de l'obturateur sont en plastomère, et un sommier élastique est placé entre le corps et la manchette.

Dans le second mode de réalisation tel que défini par la revendication 2, le moyen de serrage comporte un tore élastique logé dans un anneau de réaction et pressé par cet anneau de réaction contre la collerette. L'anneau de réaction est monté flottant dans le col avec une liberté de mouvement radial et axial par rapport à l'arbre et suit ainsi les mouvements de l'arbre sans modifier la pression de contact nécessaire à l'étanchéité.

De préférence, l'anneau de réaction est muni d'une partie conique permettant de précontraindre le tore élastique et d'une partie cylindrique comme siège du tore élastique. Par cela on évite des dégradations lors de la mise en place et on assure une précontrainte suffisante pour l'étanchéification.

Pour améliorer le fonctionnement, le moyen de serrage comporte supplémentairement un anneau d'appui sur lequel le tore élastique repose. Les dimensions radiales de l'anneau d'appui sont de telle sorte qu'il peut également suivre un mouvement radial de l'arbre.

Un autre mode de réalisation préférée est l'arrangement de l'espace dans le col près de l'obturateur autour de la collerette. Le moyen de serrage se trouve dans le voisinage immediat à la première étanchéité et est à monter par l'intérieur du corps.

De préférence le moyen de serrage comporte un ressort métallique à enroulement hélicoidal. Dans une autre réalisation préférée le sommier élastique comporte une rondelle rigide limitant le mouvement axial. Dans encore une autre réalisation préférée la manchette comporte un anneau assurant une compression radiale d'une collerette élastique du sommier ou de la collerette d'une manchette en élastomère.

Suivant une autre réalisation préférée le moyen de serrage consiste en une cage enveloppant la collerette vers l'espace, vers le col et partiellement côté arbre. La cage peut s'étendre radialement vers des brides entre la manchette et le corps. Cette cage suit radialement le déplacement imposé par la déformation de l'arbre sous l'effet de la pression différentielle appliquée sur le papillon. Ceci procure une nette amélioration des performances. Par le moyen de serrage consistant en un palier rotule guidant l'arbre et permettant en même temps un mouvement basculant composé d'un mouvement radial et axial, on peut imaginer aisément que la déformation du papillon et de l'arbre sous l'effet de la pression différentielle appliquée sur le papillon va entrainer le basculement du palier de guidage dans sa rotule et que la repartition de la compression de la collerette de la manchette ne sera pas affectée ni dans son niveau, ni dans sa répartition et ceci quelle que soit la pression différentielle du fluide véhiculé par le robinet. L'étancheité vers l'extérieur autour du passage d'arbre se trouve ainsi parfaitement assurée et fiabilisée.

Dans un autre mode de réalisation préférée le palier rotule ne porte que sur au moins une relativement petite bande sphérique, ce qui permet des solutions économiques.

Pour arriver à de grandes précisions, le palier rotule est logé dans un logement arrangé dans le col.

Le logement de la collerette rotulant conserve une répartition égale de la pression de contact autour du passage d'arbre, indépendamment de la déformation de l'arbre et du papillon.

### Présentation des différentes figures

Les dessins annexés illustrent l'invention réalisée dans un robinet à papillon avec une manchette en plastomère.
- La fig. 1a: représente, en coupe partielle, sur son côté gauche le passage d'arbre d'un robinet à papillon avec une manchette et un obturateur revêtu en plastomère en place et sur son côté droit lors de la mise en place,
- la fig. 1b: représente le robinet de la fig. 1a soumis à une pression P,
- la fig. 2: représente un détail agrandi de la fig. 1,
- la fig. 3: représente, en coupe partielle, le passage d'arbre d'un robinet à papillon avec un système d'étanchéité à monter par l'intérieur du corps,
- les fig. 4 et 5: représentent d'autres modes de réalisation d'un montage par l'intérieur du corps,
- les fig. 6 et 7: montrent un robinet à papillon avec une manchette en élastomère et une cage pour transmettre les déplacements radiaux de l'arbre à la collerette de la manchette,
- la fig. 8: montre un robinet à papillon avec une manchette en élastomère et un palier rotatif de l'arbre pour transmettre les déplacements radiaux et axiaux de l'arbre à collerette de la manchette,
- les fig. 9 et 10: montrent un robinet à papillon avec une manchette en élastomère et palier basculant partiel,
- les fig. 11 et 12: montrent un robinet à papillon avec une manchette en élastomère et palier basculant du logement de la collerette.

### Modes de réalisation

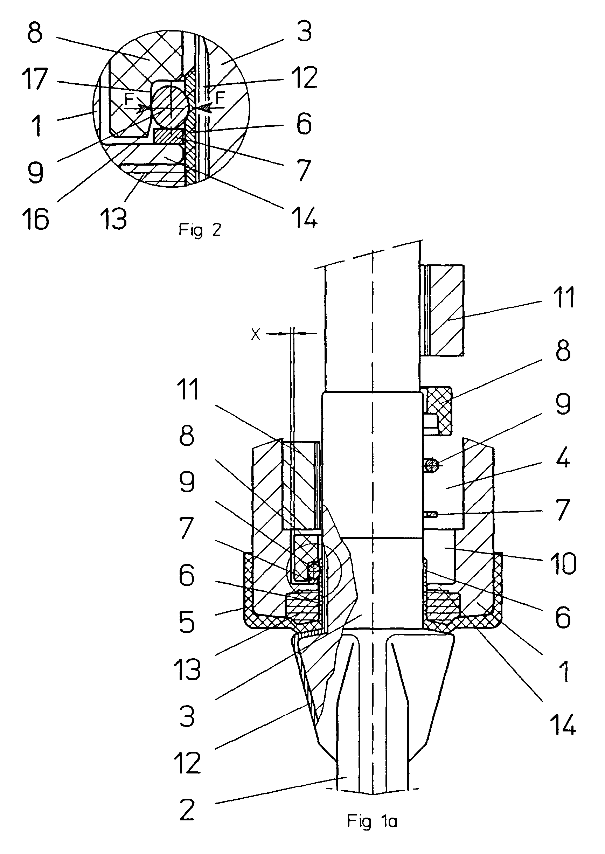

Un dispositif de robinetterie selon l'invention, représenté à la fig. 1a, comprend un corps 1, un obturateur 2 manipulé par un arbre 3 guidé dans un col 4 du corps 1.

L'étanchéité entre le corps 1 et l'arbre 3 est assurée par une manchette d'étanchéité 5 munie d'une collerette 6 qui s'étend sur une certaine longueur le long du col 4 entre celui-ci et l'arbre 3. À une certaine distance du début de la collerette 6 elle est rélativement mince, ce qui permet de transmettre des efforts radiaux.

Autour de la collerette 6 est positionné un moyen de serrage 7,8,9 dans un espace 10 dans le col 4 du corps 1. Le moyen de serrage 7,8,9 comporte un anneau d'appui 7 axial, un anneau de réaction 8 radial et un tore élastique 9. L'anneau de réaction 8 est placé dans l'espace 10 et dimensionné d'une telle manière, qu'il est mobile entre l'arbre 3 et le corps 1.

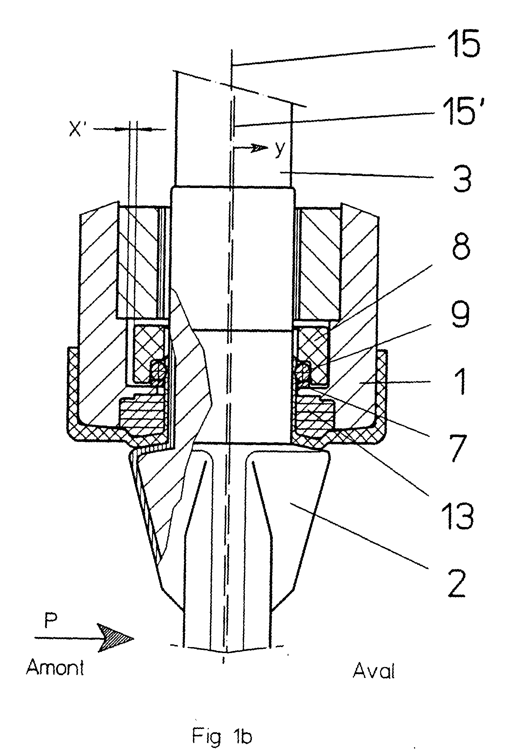

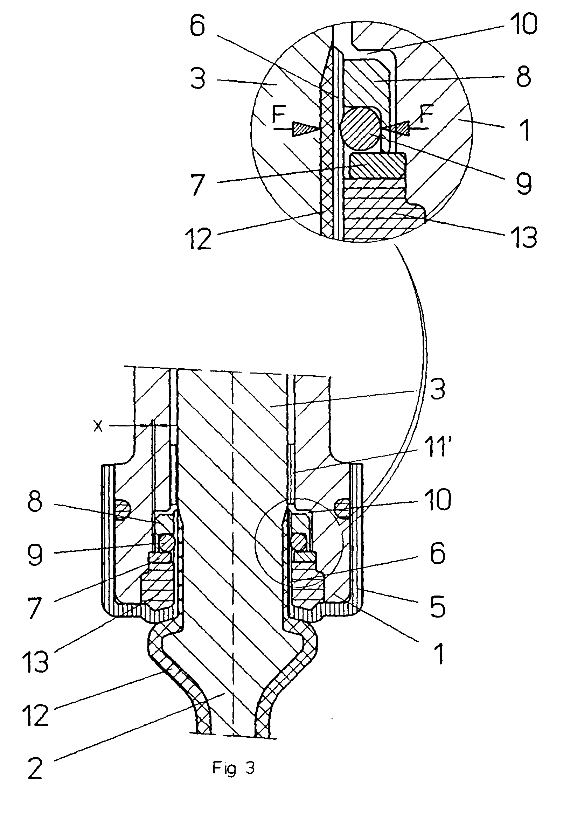

Dans l'agrandissement fig. 2 de la fig. 1 les éléments du moyen de serrage 7,8,9 sont représentés dans un état initial. Dans l'anneau de réaction 8 est logé radialement le tore élastique 9 de sorte qu'il excerce à son côté orienté vers l'arbre 3 un effort F sur la collerette 6 et par conséquent sur l'arbre 3. Son côté orienté vers le corps est en appui sur l'anneau de réaction 8.

L'effort F est créé par la précontrainte de l'anneau 8 sur le tore 9 lors du montage du moyen de serrage 7,8,9. Pour éviter l'échappement du tore 9 sous charge dans le sens axial, il s'appuie d'un côté axial sur l'anneau d'appui 7 et est logé d'autre côté dans l'anneau de réaction 8 réalisé en forme de L.

L'anneau de réaction 8 est montée flottant dans l'espace 10 avec une liberté de mouvement axial et radial par rapport au col 4. Le jeu radial est indiqué par X. Le mouvement axial est cependant limité par une pièce de retenu 11 fixée dans le col 4. Cette pièce de retenu 11 sert également comme palier radial de l'arbre 3.

Le robinet à papillon illustré à titre d'exemple montre un obturateur 2 avec un revêtement 12 en plastomère comme le PTFE (téflon), qui s'étend le long de l'arbre 3 dans le col 4, et une manchette 5 en plastomère comme le PTFE (téflon) avec une collerette 6 et un sommier élastique 13.

L'étanchéité entre l'obturateur 2 et le col 4 est réalisé par deux moyens. Premièrement il y a une étanchéité au niveau de l'entrée de l'arbre 3 dans le corps 1. La manchette en plastomère n'ayant pas d'élasticité suffisante, un sommier en élastomère 13 est prévu entre le corps 1 et la manchette 5 pour créer une précontrainte entre la manchette 5 et le revêtement de l'obturateur pour assurer l'étanchéité amont/aval et le premier niveau d'étanchéité autour de l'arbre 3. Après cette première étanchéité se trouve l'étanchéité de sécurité assurée par le moyen de serrage 7,8,9.

La mise en place du moyen de serrage 7,8,9 se fait comme démontrée dans la fig. la côté droit. Une fois l'obturateur 2 avec l'arbre 3 insérés dans le corps 1 et le col 4, l'anneau d'appui 7 est enfilé sur l'arbre 3 et descendu vers l'obturateur 2. Après avoir passé le bout de la collerette 6 il se trouve dans l'espace 10 ou il est retenu par un épaulement 14 du corps 1.

Ensuite le tore élastique 9 non-déformé est enfilé sur l'arbre 3 et descendu vers l'obturateur 2. Après avoir passé le bout de la collerette 6 il se trouve placé sur l'anneau d'appui 7. Puis l'anneau de réaction 8 est mis en place. En descendant, l'anneau 8 dépasse le tore 9 se met avec sa partie conique 16 entre le tore 9 et le corps 1. En descendant davantage l'anneau 8, le tore 9 est serré radialement entre la collerette 6, qui s'appui contre l'arbre 3, et l'anneau 8. Ceci provoque une déformation élastique du tore 9 entré dans la partie cylindrique 17 de l'anneau de réaction 8 et crée ainsi une force d'étanchéié F, qui assure l'étanchéité entre l'arbre 3 et la collerette 6. Finalement une pièce de retenu 11 est montée pour limiter le mouvement axial du moyen de serrage 7,8,9.

La fig. 1b représente l'état du dispositif de robinetterie sous pression P. Suite à la pression une force est excercée sur l'obturateur, ce qui provoque un décalage Y de l'axe 15 vers 15' et une flexion de l'obturateur 2 et de l'arbre 3 en direction de la force créée par la pression P. L'étanchéité au niveau de l'entrée de l'arbre 3 est affaiblie, car l'arbre 3 s'est éloigné du corps 1 côté amont et donc la précontrainte du sommier en élastomère 13 a diminué. Ceci est représenté par un jeu X' augmenté résultant de ce décalage.

Pour maintenir l'étanchéité globale du dispositif, la deuxième étanchéité est conservée grâce au moyen de serrage 7,8,9 mobile radialement. Le moyen de serrage 7,8,9 suit le déplacement en direction radiale de l'arbre 3 sans modifier la pression de contact F nécessaire à l'étanchéité.

La fig. 3 montre un robinet à papillon avec un système d'étanchéité à monter par l'intérieur du corps 1. On retrouve en principe les mêmes éléments, mais au lieu d'une pièce de retenu 11 comme butée et palier d'arbre on trouve un corps d'une forme appropriée et un palier 11' supplémentaire.

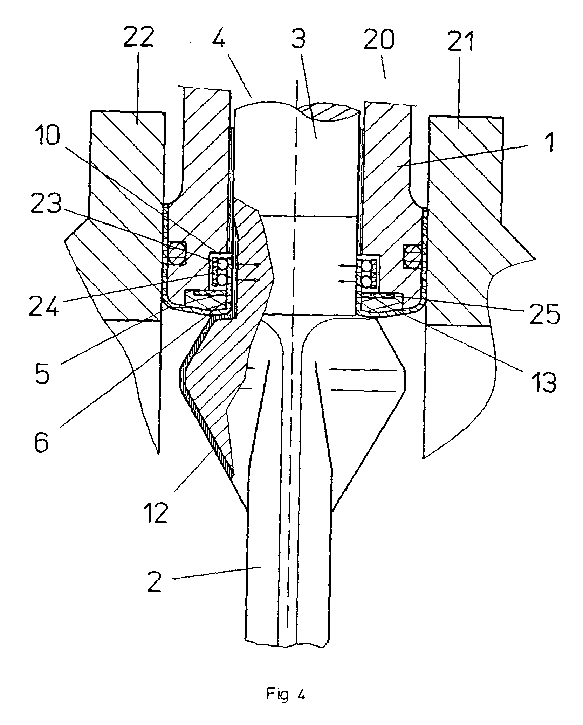

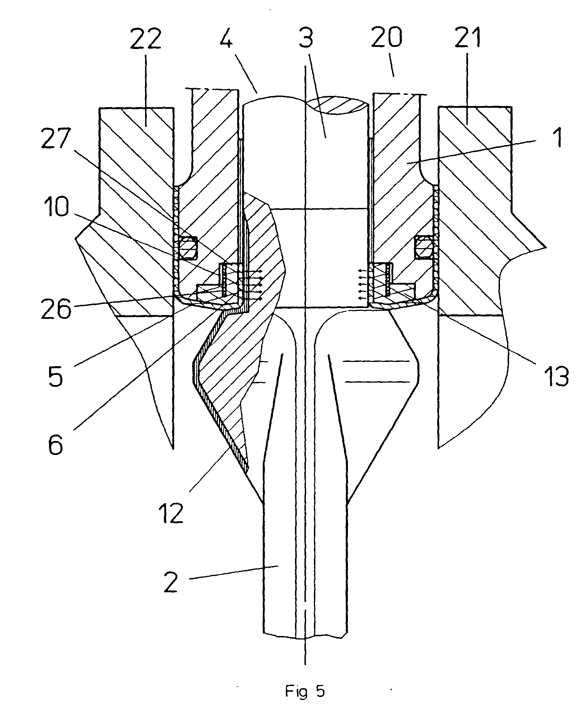

Les fig. 4 et 5 montrent un robinet à papillon avec un système d'étanchéité intégré. Les deux étanchéités sont arrangées sur un minimum de place.

Dans la fig. 4 est représenté un robinet à papillon 20 monté entre deux brides 21,22. Il comporte un obturateur 2 revêtu avec un revêtement 12 montant le long d'un arbre 3 dans un col 4 d'un corps 1. Une manchette 5 assure l'étanchéité avec les brides 21,22 et l'arbre 3. Pour réaliser cela, elle est munie d'une collerette 6 montant dans le col 4 du corps 1. La manchette 5 étant en plastomère, un sommier élastique 13 est prévu pour assurer l'étanchéité à l'entrée. Le long du col 4 et entre le corps 1 et la collerette 6 se trouve un espace 10 dans lequel est placé un moyen de serrage 23,24. Pour éviter l'échappement du sommier 13 dans l'espace 10 une rondelle rigide 25 est associé au sommier 13 et orientée vers l'espace 10, fonctionnant comme butée pour le sommier 13.

Le moyen de serrage 23,24 consiste en deux ressorts métalliques 23 à enroulement hélicoidal et en un anneau 24. Les ressorts 23 excercent une force représenté par des flêches sur la collerette 6 créant autant de barrières étanches. Le moyen de serrage 23,24 est monté radialement et axialement flottant dans l'espace 10, tandis que le sommier 13 est fixe.

Dans la fig. 5 le moyen de serrage consiste en un anneau rigide 26 attaché au sommier 13 et s'étendant le long de l'arbre 3. Le sommier 13 comporte une collerette 27 orientée vers le col 4 et parallèle a la collerette 6 de la manchette 5. L'anneau 26 tient comprimée la collerette 27 après la mise en place.

La mise en place du moyen de serrage 23,24;26 selon les fig. 4 et 5 dans le col 4 se fait du côté obturateur 2. Dans le cas de la fig. 4, le sommier 13 et le moyen de serrage 23,24 sont insérés dans le corps 1. Dans le cas de la fig. 5, uniquement le sommier 13 doit être inséré. Ensuite la manchette 5 avec l'obturateur 2 et l'arbre 3 montés est appuyée dans le col 4.

Lors du montage, une précontrainte est crée dans les ressorts 23, et respectivement dans la collerette 27, par le serrage des ressorts 23 et de la collerette 27 entre la collerette 6 et les anneaux 24;26 et conservée par les anneaux 24;26.

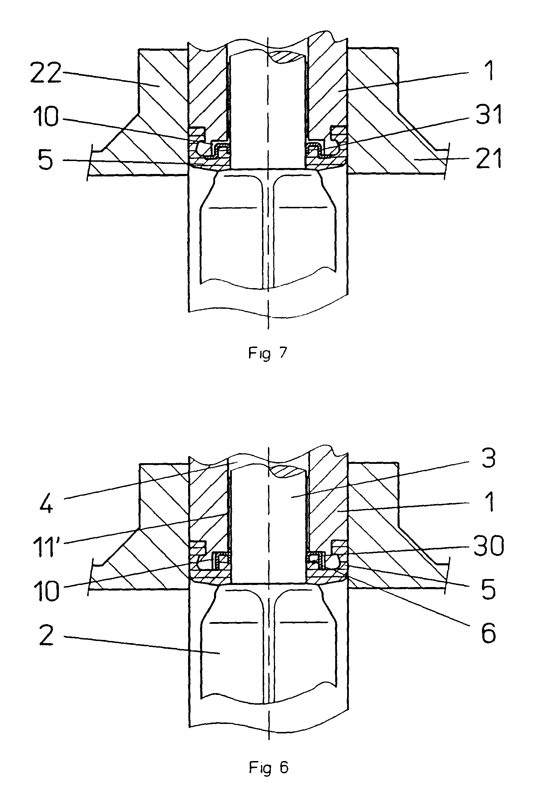

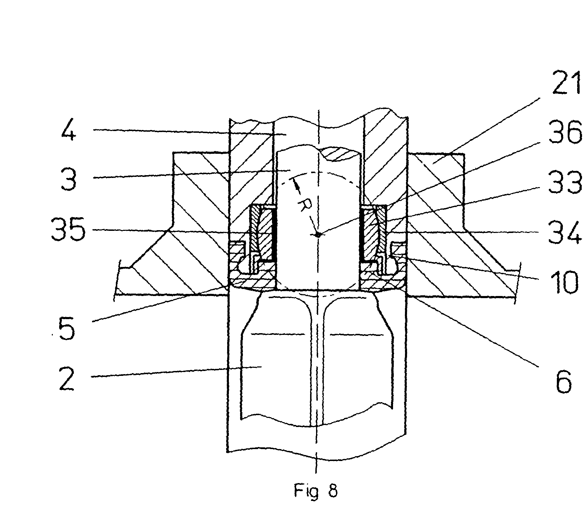

Les fig. 6 et 7 montrent un robinet à papillon avec une manchette en élastomère 5 et une cage 30;31 transmettant les déplacements radiaux de l'arbre à la collerette 6 de la manchette 5. La cage 30;31 enveloppe la collerette 6 vers l'espace 10, vers le col 4 et partiellement côté arbre 3. Pour limiter le déplacement axial de la collerette 6, la cage 31 s'étend radialement vers des brides 21,22 entre la manchette 5 et le corps 1.

la fig. 8 montre un robinet à papillon avec une manchette en élastomère 5 et un palier rotule 33 de l'arbre 3 comme moyen de serrage pour transmettre les déplacements radiaux et axiaux de l'arbre 3 à la collerette 6 de la manchette 5. Le palier rotule 33 est logé dans un logement 34 arrangé dans le col 4. Sous l'effet de la pression différentielle appliquée sur l'obturateur 2, on peut imaginer aisément que la déformation de l'obturateur 2 et de l'arbre 3 va entrainer la rotation à travers un palier de guidage 35 de l'arbre 3 et du palier rotule 33 dans son logement 34 et que la répartition de la compression de la collerette 6 de la manchette 5 ne sera pas affectée ni dans son niveau, ni dans sa répartition et ceci quelle que soit la pression différentielle du fluide véhiculé par le robinet. Le basculement du palier 33 se fait autour du centre 36 de la sphère de rayon R. Le mouvement de basculement est composé d'un mouvement radial et axial.

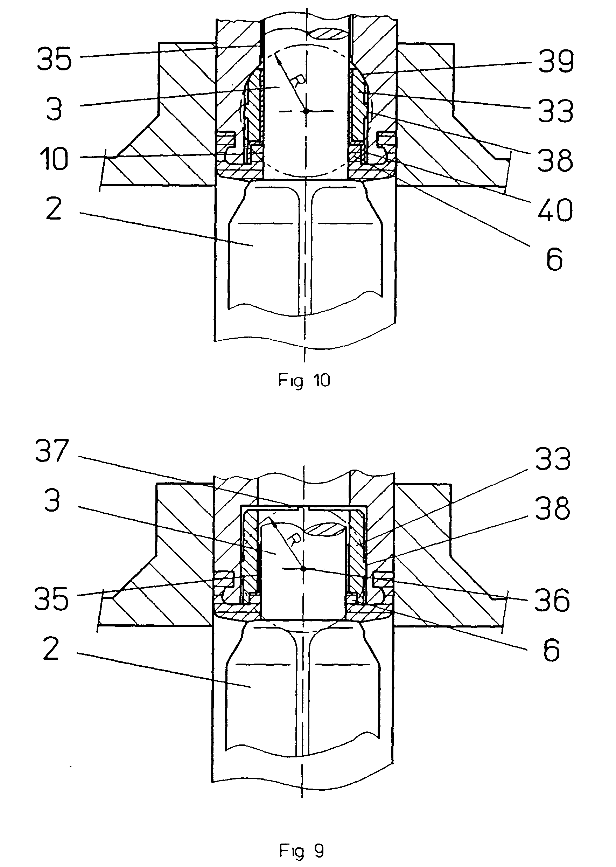

Pour simplifier la réalisation, les fig. 9 et 10 montrent un robinet à papillon avec une manchette en élastomère 5 et un palier rotatif partiel.Le palier rotule 33 ne porte que sur de relativement petites bandes sphériques 37,38,39. Une bande sphérique 38 se trouve au milieu du palier rotule 33, l'autre bande sphérique 37;39 se trouve à l'opposé de la portée de l'obturateur 2. Pour guider l'arbre 3 un palier 35 est prévu. Une modification du palier rotule 33 consiste en la suppression de la pièce 40.

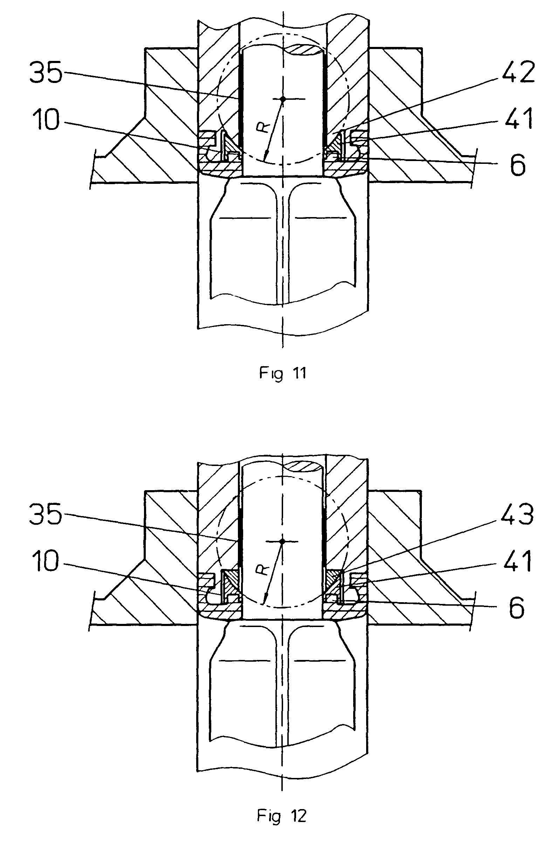

Les fig. 11 et 12 montrent un robinet à papillon avec une manchette en élastomère 5 et un palier rotule du logement 41 de la collerette 6. Seul le logement 41 de la collerette 6 est constitué comme palier rotule, l'arbre est guidé par le palier 35. Le contre-logement 42 lui-même du logement 41 est une partie sphérique 42 du corps ou une pièce indépendante 43 monté flottant dans l'espace 10.

### Application industrielle

Il est évident que l'invention s'utilise aussi pour assurer l'étanchéité des arbres dans des robinets à boisseau ou autres dispositifs de robinetterie.

## Revendications

1. Dispositif de robinetterie comportant un corps (1), un obturateur (2) manipulé par un arbre (3) guidé dans un col (4) du corps (1) et une manchette d'étanchéité (5) munie d'une collerette (6) qui s'étend sur une certaine longueur le long du col (4) entre celui-ci et l'arbre (3), un moyen de serrage (7,8,9;23,24;26,27;30;31;33;40;41) positionné autour de la collerette (6) dans un espace (10) du corps (1) et dimensionné d'une telle manière qu'il exerce un effort sur la collerette (6) et par conséquent sur l'arbre (3) et qu'il est monté dans ledit espace (10) du corps en ayant une liberté de mouvement radial ou de basculement par rapport au corps (1), **caractérisé en ce que** l'obturateur (2) est muni d'un revêtement (12), **en ce que** la manchette (5) et le revêtement (12) de l'obturateur (2) sont en plastomère et **en ce qu'**entre le corps (1) et la manchette (5) est placé un sommier élastique (13).

2. Dispositif de robinetterie comportant un corps (1), un obturateur (2) manipulé par un arbre (3) guidé dans un col (4) du corps (1) et une manchette d'étanchéité (5) munie d'une collerette (6) qui s'étend sur une certaine longueur le long du col (4) entre celui-ci et l'arbre (3), un moyen de serrage (7,8,9) positionné autour de la collerette (6) dans un espace (10) du corps (1), le moyen de serrage (7,8,9) étant dimensionné d'une telle manière qu'il exerce un effort sur la collerette (6) et par conséquent sur l'arbre (3) et qu'il est monté dans ledit espace (10) du corps en ayant une liberté de mouvement radial ou de basculement par rapport au corps, **caractérisé en ce que** le moyen de serrage (7,8,9) comporte un tore élastique (9) logé dans un anneau de réaction (8) et pressé par cet anneau de réaction (8) contre la collerette (6), l'anneau de réaction (8) étant monté flottant dans le col (4) avec liberté de mouvement radial et axial par rapport à l'arbre (3).

3. Dispositif de robinetterie suivant la revendication 2, **caractérisé en ce que** l'anneau de réaction (8) est muni d'une partie conique (16) permettant de précontraindre le tore élastique (9) et d'une partie cylindrique (17) comme siège du tore élastique (9).

4. Dispositif de robinetterie suivant la revendication 2 ou 3 **caractérisé en ce que** le moyen de serrage (7,8,9) comporte supplémentairement un anneau d'appui (7) sur lequel le tore élastique (9) repose axialement, les dimensions radiales étant de telle sorte que l'anneau d'appui (7) peut également suivre un mouvement radial de l'arbre (3).

5. Dispositif de robinetterie suivant l'une des revendications précédentes, **caractérisé en ce que** l'espace (10) est arrangée dans le col (4) près de l'obturateur (2) autour de la collerette (6), le moyen de serrage (7,8,9;23,24;26,27;30; 31;33;40;41) se trouvant dans le voisinage immediat et étant à monter par le côté obturateur (2).

6. Dispositif de robinetterie suivant la revendication 5, **caractérisé en ce que** le moyen de serrage (23,24) comporte au moins un ressort métallique (23) à enroulement hélicoidal.

7. Dispositif de robinetterie suivant les revendications 1 et 6, **caractérisé en ce que** le sommier élastique (13) comporte une rondelle rigide (25) servant de butée axial au sommier (13).

8. Dispositif de robinetterie suivant la revendication 5, **caractérisé en ce que** le moyen de serrage (26,27) comprend un anneau (26) assurant une compression radiale d'une collerette élastique (27) ou de la collerette (6) d'une manchette (5) en élastomère.

9. Dispositif de robinetterie suivant la revendication 5, **caractérisé en ce que** le moyen de serrage consiste en une cage (30;31;40) enveloppant la collerette (6) vers l'espace (10), vers le col (4) et partiellement côté arbre (3).

10. Dispositif de robinetterie suivant la revendication 9, **caractérisé en ce que** la cage (31) s'étend radialement vers des brides (21,22) entre la manchette (5) et le corps (1).

11. Dispositif de robinetterie suivant la revendication 5, **caractérisé en ce que** le moyen de serrage consiste en un palier rotule (33;41).

12. Dispositif de robinetterie suivant la revendication 11, **caractérisé en ce que** le palier rotule (33) ne porte que sur au moins une rélativement petite bande sphérique.

13. Dispositif de robinetterie suivant la revendication 11 ou 12, **caractérisé en ce que** le palier rotule (33) est logé dans un logement (34) arrangé dans le col (4).

14. Dispositif de robinetterie suivant la revendication 11, **caractérisé en ce qu'**un logement (43) du palier rotule (41) est monté flottant dans l'espace (10).

## Claims

1. Valve device comprising a body (1), a shutter (2) manipulated by a shaft (3) guided in a neck (4) of the body (1) and a sealing sleeve (5) provided with a collar (6) which extends over a certain length along the neck (4) between the latter and the shaft (3), a clamping device (7, 8, 9; 23, 24; 26, 27; 30; 31; 33; 40; 41) positioned around the collar (6) in a space (10) in the body (1) and being of such dimensions that it exerts a force on the collar (6) and consequently on the shaft (3) and is mounted in the space (10) of the body (1) whilst having radial and/or pivotal freedom of movement relative to the body (1), **characterised in that** the shutter (2) is provided with a covering (12), **in that** the sleeve (5) and the covering (12) of the shutter (2) are made of plastomer and that a flexible cushion (13) is placed between the body (1) and the sleeve (5).

2. Valve device comprising a body (1), a shutter (2) manipulated by a shaft (3) guided in a neck (4) of the body (1) and a sealing sleeve (5) provided with a collar (6) which extends over a certain length along the neck (4) between the latter and the shaft (3), a clamping device (7, 8, 9) positioned in a space (10) of the body (1), the clamping device (7, 8, 9) being of such dimensions that it exerts a force on the collar (6) and consequently on the shaft (3) and is mounted in said space (10) of the body whilst having radial and pivotal freedom of movement relative to the body (1), **characterised in that** the clamping device (7, 8, 9) comprises a resilient torus (9) housed in a reaction ring (8) and pressed against the collar (6) by this reaction ring (8), said ring (8) being floatingly mounted in the neck (4) with radial and axial freedom of movement relative to the shaft (3).

3. Valve device according to claim 2, **characterised in that** the reaction ring (8) is provided with a conical part (16) permitting prestressing of the resilient torus (9) and of a cylindrical part (17) acting as the seating for the resilient torus (9).

4. Valve device according to claim 2 or 3, **characterised in that** the clamping device (7, 8, 9) additionally comprises a support ring (7) on which the resilient torus (9) rests axially, the radial dimensions being such that the support ring (7) is also able to follow any radial movement of the shaft (3).

5. Valve device according to one of previous claims 1 to 4, **characterised in that** the space (10) is arranged in the neck (4) close to the shutter (2) around the collar (6), the clamping device (7,8,9;23,24;26,27;30;31;33;40;41) being located in the immediate vicinity and being mounted from the shutter (2) side.

6. Valve device according to claim 5, **characterised in that** the clamping device (23, 24) comprises at least one helically wound metal spring (23).

7. Valve device according to claim 1 and 6, **characterised in that** the flexible cushion (13) comprises a rigid washer (25) acting as an axial abutment for the cushion (13).

8. Valve device according to claim 5, **characterised in that** the clamping device (26, 27) comprises a ring (26) which ensures radial compression of a flexible collar (27) or of the collar (6) of an elastomer sleeve (5).

9. Valve device according to claim 5, **characterised in that** the clamping device consists of a cage (30;31;40) enveloping the collar (6) against the space (10), the neck (4) and partly on the shaft side (3).

10. Valve device according to claim 9, **characterised in that** the cage (31) extends radially towards flanges (21, 22) between the sleeve (5) and the body (1).

11. Valve device according to claim 5, **characterised in that** the clamping device consists of a swivel bearing (33;41).

12. Valve device according to claim 11, **characterised in that** the swivel bearing (33) bears only. on at least one relatively small spherical strip.

13. Valve device according to claim 11 or 12, **characterised in that** the swivel bearing (33) is housed in a recess (34) arranged in the neck (4).

14. Valve device according to claim 11, **characterised in that** a recess (43) for the swivel bearing (41) is mounted so as to float in the space (10).

## Patentansprüche

1. Armatur, die ein Gehäuse (1) aufweist sowie eine Verschlussvorrichtung (2) die durch eine in einem Hals (4) des Gehäuses (1) geführte Welle (3) betätigt wird, und eine Abdichtungsmanschette (5) mit einem Kragen (6), der sich über eine gewisse Länge des Halses (4) zwischen diesem und der Welle (3) erstreckt, und noch ein Klemmmittel (7,8,9;23,24;26,27;30;31;33;40;41) aufweist, das rings um den Kragen (6) in einem Zwischenraum (10) des Gehäuses (1) angeordnet ist und so ausgebildet ist, dass es eine Kraft auf den Kragen (6) und damit auf die Welle (3) ausübt und in dem besagten Raum (10) des Gehäuses (1) so eingebaut ist, dass es die Möglichkeit hat, eine radiale oder kippende Bewegung im Verhältnis zum Gehäuse (1) auszuführen, **dadurch gekennzeichnet, dass** die Verschlussvorrichtung (2) mit einem Überzug (12) versehen ist, wobei die Manschette (5) und der Überzug (12) der Verschlussvorrichtung (2) aus einem Plastomer bestehen und dass zwischen dem Gehäuse (1) und der Manschette (5) ein elastischer Träger (13) angeordnet ist.

2. Armatur die ein Gehäuse (1) aufweist sowie eine Verschlussvorrichtung (2) die durch eine in einem Hals (4) des Gehäuses (1) geführte Welle (3) betätigt wird, und eine Abdichtungsmanschette (5) mit einem Kragen (6), der sich über eine gewisse Länge des Halses (4) zwischen diesem und der Welle (3) erstreckt, und noch ein Klemmmittel (7,8,9) aufweist, das rings um den Kragen (6) in einem Zwischenraum (10) des Gehäuses (1) angeordnet ist, wobei das Klemmmittel (7,8,9) so dimensioniert ist, dass es eine Kraft auf den Kragen (6) und damit auf die Welle (3) ausübt und in dem besagten Raum (10) des Gehäuses (1) so angeordnet ist, dass es die Möglichkeit hat, eine radiale oder kippende Bewegung im Verhältnis zu dem Gehäuse (1) auszuführen, **dadurch gekennzeichnet, dass** das Klemmmittel (7,8,9) einen elastischen Ringwulst (9) aufweist, der in einem Gegendruckring (8) untergebracht ist und durch diesen Gegendruckring (8) gegen den Kragen (6) gedrückt wird, wobei der Gegendruckring (8) in dem Hals (4) beweglich montiert ist mit einer radialen und axialen Bewegungsfreiheit im Verhältnis zur Welle (3).

3. Armatur nach Anspruch 2, **dadurch gekennzeichnet,dass** der Gegendruckring (8) einen konischen Bereich (16) aufweist, der es ermöglicht, dem Ringwulst (9) eine mechanische Vorspannung zu erteilen, und einen zylindrischen Bereich (17) als Sitz für den elastischen Ringwulst (9).

4. Armatur nach Anspruch 2 oder 3, **dadurch gekennzeichnet, dass** das Klemmmittel (7,8,9) zur Ergänzung einen Stützring (7), auf welchem der elastische Ringwulst (9) axial ruht, aufweist, wobei die radialen Abmessungen so gewählt sind, dass der Stützring (7) gleichmäßig einer radialen Bewegung der Welle (3) folgen kann.

5. Armatur nach einem der vorhergehenden Ansprüche, **dadurch gekennzeichnet, dass** der Raum (10) in dem Hals (4) in der Nähe der Verschlussvorrichtung (2) rings um den Kragen (6) vorgesehen ist, wobei das Klemmittel (7,8,9;23,24;26,27;30;31;33;40;41) sich in unmitteibarer Nachbarschaft befindet und von der Seite der Verschlussvorrichtung (2) her einzubauen ist.

6. Armatur nach Anspruch 5, **dadurch gekennzeichnet, dass** das Klemmmittel (23,24) mindestens eine metallische Schraubenfeder (23) aufweist.

7. Armatur nach den Ansprüche 1 und 6, **dadurch gekennzeichnet, dass** der elastische Träger (13) eine starre Unterlegscheibe (25) aufweist, die als axiales Widerlager für den Träger (13) dient.

8. Armatur nach Anspruch 5, **dadurch gekennzeichnet, dass** das Klemmmittel (26,27) einen Ring (26) aufweist, der einen radialen Druck eines elastischen Kragens (27) oder des Kragens (6) einer aus einem Elastomer bestehenden Manschette (5) gewährleistet.

9. Armatur nach Anspruch 5, dadurch gekennz e i c h n e t, dass das Klemmmittel aus einem Einsatz (30;31;40) besteht, der den Kragen (6) gegenüber dem Rahmen (10), dem Hals (4) und teilweise gegenüber der Seite der Welle (3) umgibt.

10. Armatur nach Anspruch 9, **dadurch gekennzeichnet, dass** der Einsatz (31) sich radial zu den Flanschen (21,22) hin zwischen der Manschette (5) und dem Gehäuse (1) erstreckt.

11. Armatur nach Anspruch 5, **dadurch gekennzeichnet, dass** das Klemmmittel aus einem Kipplager (33;41) besteht.

12. Armatur nach Anspruch 11, **dadurch gekennzeichnet, dass** das Kipplager (33) nur einen verhältnismäßig kleinen sphärischen Bereich aufweist.

13. Armatur nach Anspruch 11 oder 12, **dadurch gekennzeichnet, dass** das Kipplager (33) in einem in dem Hals (4) eingereichten Lagersitz (34) untergebracht ist.

14. Armatur nach Anspruch 11, **dadurch gekennzeichnet, dass** ein Lagersitz (43) des Kipplagers (41) in dem Raum (10) beweglich eingebaut ist.
